# EUROPEAN PATENT APPLICATION

(11) **EP 3 718 431 A1**
(43) Date of publication of application: **07.10.2020**
(21) Application number: 19166954.8
(22) Date of filing: 03.04.2019
(51) Int. Cl.: A45D 2/00, A45D 20/10, A45D 20/12, A45D 24/04, A45D 24/10

(54) **HAIR CARE DEVICE HAVING ION GENERATOR**

(71) Applicant: Koninklijke Philips N.V., 5656 AG Eindhoven (NL)
(72) Inventor: LELIEVELD, Mark Johannes, 5656 AE Eindhoven (NL)
(74) Representative: Steenbeek, Leonardus Johannes

(57) **Abstract**

A hair care device (B) comprises an ion generator (I), and a grounding protrusion protruding from the hair care device (B). When the hair care device comprises a sensor (MP), and ancillary elements (AE, G) for guiding hair to or along the sensor (MP), the grounding protrusion advantageously includes at least one of the ancillary elements (AE, G).

## Description

### FIELD OF THE INVENTION

The invention relates to a hair care device having an ion generator.

### BACKGROUND OF THE INVENTION

US 2011/0094535 discloses a hair care device, having a handle, a function head which can be connected to the handle, and which has a hair treatment device, particularly a brush and/or a tooth field, and having an ion-discharging device for discharging ions onto the hair, the ion discharging device having at least one ion outlet. The function head and/or a housing part which surrounds the ion outlet has at least one grounding area for dissipating / limiting electronic charges. Such a grounding surface on the function head and/or on the housing part surrounding the ion outlet prevents or limits excess charging, and correspondingly prevents or limits electrostatic fields in the area of the function head and in the area of the ion outlet that could impede the discharge of ions onto the hair. The grounding surface can in principle be designed in various ways. In particular, the grounding surface can be designed in the form of a metallic surface that is attached to a non-conductive body or housing part, preferably made of plastic, of the function head and/or of the ion outlet. The body of the function part or of the ion outlet itself can in addition be designed as a plastic injection-molded part or as a plastic part manufactured in some other way. The grounding surface in the form of a metallic surface, which is advantageously arranged on an external side of the named body parts and can form the outer surface thereof, not only prevents the fields that impair the ion discharge, but also increases the operational safety of the hair care device. With regard to the arrangement of the grounding surfaces, various embodiments may be advantageous. On the function head, an advantageous arrangement may consist in that the grounding surface is connected to the hair treatment device, in particular to the brush and/or tooth field. For example, the grounding surface may form, so to speak, the bed that the brush or teeth of the brush field, or that bears the treatment tool, which may optionally also be designed differently, of the hair treatment device.

WO 2019/057575 discloses a device for measuring hair properties, comprising alignment elements at opposite sides of a measuring probe for bending hair against the measuring probe, and guidance elements for mitigating an influence of an angle at which the device is applied to the hair to the friction force and/or the deformation force, while the measuring probe is mounted to a load cell module for measuring a load in two dimensions to measure friction force and deformation force, respectively. The alignment elements and guidance elements may be made from stainless steel or any other suitable material.

### SUMMARY OF THE INVENTION

It is, inter alia, an object of the invention to provide an improved hair care device. The invention is defined by the independent claims. Advantageous embodiments are defined in the dependent claims.

One aspect of the invention provides a hair care device that comprises an ion generator, and a grounding protrusion protruding from the hair care device. When the hair care device comprises a sensor, and ancillary elements for guiding hair to or along the sensor, the grounding protrusion advantageously includes at least one of the ancillary elements.

Embodiments of the invention are based on the recognition that for a good grounding, it is necessary to ensure a good electrical contact between a user and the hair care device. In view thereof, various embodiments of the invention provide a grounding protrusion.

Advantageously but not necessarily, the grounding protrusion includes or is formed by elements protruding anyway from the hair care device for other purposes unrelated to grounding, so that no separate structures need to be provided for grounding.

These and other aspects of the invention will be apparent from and elucidated with reference to the embodiments described hereinafter.

### BRIEF DESCRIPTION OF THE DRAWINGS

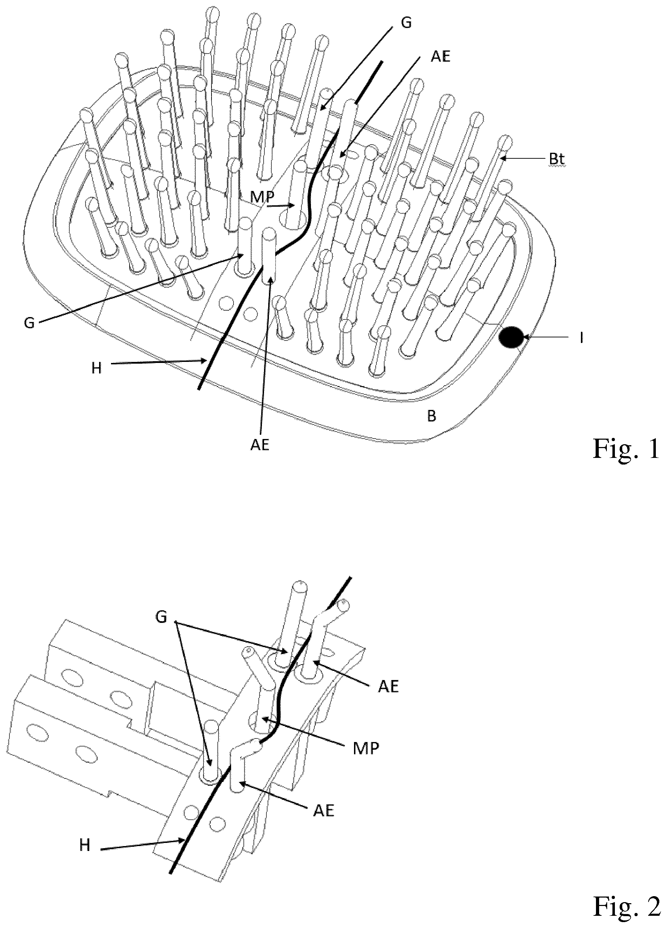

Figs. 1-4 illustrate embodiments of a hair care device according to the invention.

### DESCRIPTION OF EMBODIMENTS

Figs. 1-4 show embodiments of a brush B having bristles Bt. The brush B has the same elements as discussed in WO 2019/057575, incorporated herein by reference: a sensor having a measuring probe MP, alignment elements AE, and guidance elements G. On top thereof, in accordance with embodiments of the present invention, the brush B has an ion generator outlet I, while one or both alignment elements AE and/or one or both guidance elements G act as a grounding protrusion protruding from the brush B. To that end, one or both alignment elements AE and/or one or both guidance elements G are made of stainless steel, or from any other suitable conductive material, or from any suitable non-conductive material provided with a conductive coating. The ion generator may e.g. be formed as shown in US 2011/0094535, and the grounding protrusions are suitably connected so as to optimally dissipate or limit electronic charges.

As discussed in WO 2019/057575, the embodiment of Fig. 1 is executed in such a way, that while brushing the hair, the hair H is guided along the alignment elements AE and the measuring probe MP. By pulling the brush through the hair, a friction force and a bending force is induced in load cells coupled to the measuring probe MP. The embodiments of Figs. 2-4 are aimed at increasing the amount of hairs that is caught in the system, so as to obtain a stronger measurement signal. These other embodiments thereby also show alternative arrangements for the grounding protrusion(s).

In the embodiment of Fig. 2, the tops of the alignment element AE and the measuring probe MP are bent in such a way, that when brushing the hair, more hair is caught in the opening of the measurement system, resulting in a larger measurement signal. An additional guiding pin G is added to reduce dependency on the hold angle of the device.

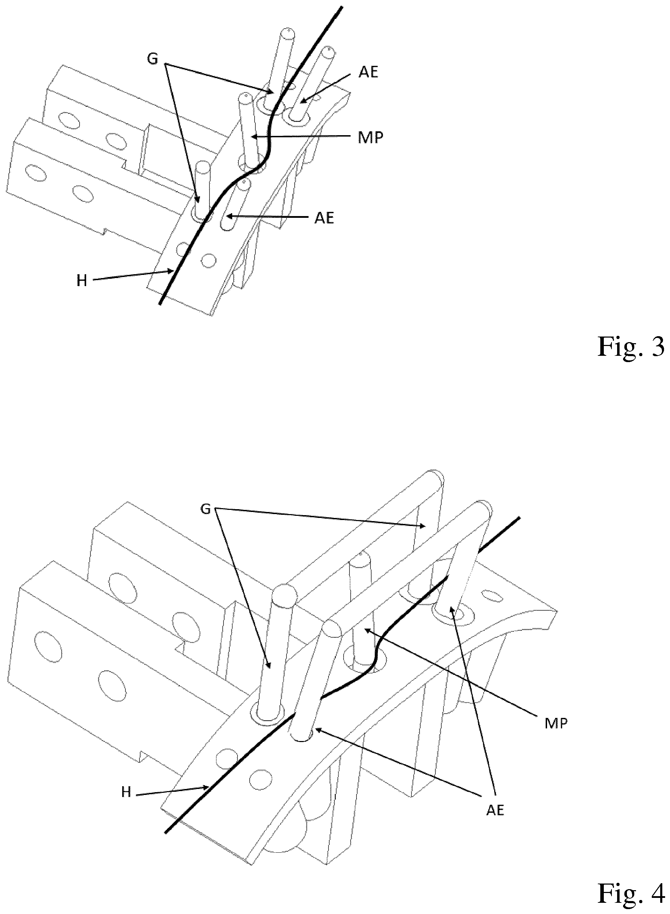

In the embodiment of Fig. 3, not only the measuring probe MP is at an angle, but also the alignment elements AE. Thereby, even more hair is captured in the system, resulting in a larger measurement signal.

The embodiment of Fig. 4 addresses the issue that when the brush is not put perpendicular to the hair direction on the head, but at a certain angle, hair is guided on the wrong side of the measuring probe MP, resulting in a false measurement signal. To prevent hairs from ending up at the wrong side of the measuring probe MP, both alignment elements AE and both guidance elements G are interlinked. Now hairs will only face the intended side of the measuring probe MP. In alternative embodiments, only the alignment elements AE are interlinked or only the guidance elements G are interlinked. Also, interlinked elements AE, G do not need to have a rectangular layout as shown in Fig. 5; instead, they may be formed like an arc, so having a round shape.

In other alternative embodiments of a brush B having an ion generator I, one or more of the bristles Bt is made from or covered with a conductive material, and acts as grounding protrusion. Alternatively, the hair care device may be a comb (in which one or more of the comb teeth may act as grounding protrusion), a hair straightener, or a hair dryer (when provided with a massaging attachment, one or more of the protrusions of the massaging attachment may act as grounding protrusion).

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

## Claims

1. A hair care device (B), comprising:
an ion generator (I), and
a grounding protrusion protruding from the hair care device (B).

2. A hair care device as claimed in claim 1, wherein the hair care device comprises a sensor (MP), and ancillary elements (AE, G) for guiding hair to or along the sensor (MP), and the grounding protrusion includes at least one of the ancillary elements (AE, G).
